# EUROPÄISCHE PATENTSCHRIFT

(11) **EP 3 894 286 B1**
(45) Veröffentlichungstag und Bekanntmachung des Hinweises auf die Patenterteilung: **07.02.2024**
(21) Anmeldenummer: 19817226.4
(22) Anmeldetag: 04.12.2019
(51) Int. Cl.: B60S 1/48, F24H 1/00

(54) **BEHEIZTE REINIGUNGSVORRICHTUNG**
HEATED CLEANING DEVICE
DISPOSITIF DE NETTOYAGE CHAUFFÉ

(30) Priorität: 10.12.2018 DE 102018221354
(43) Veröffentlichungstag der Anmeldung: 20.10.2021
(73) Patentinhaber: Continental Automotive Technologies GmbH, 30165 Hannover (DE)
(72) Erfinder: WEITZEL, Heiko, 60488 Frankfurt am Main (DE); REHS, Andreas, 60488 Frankfurt am Main (DE); SCHÄCKEL, Stefan, 60488 Frankfurt am Main (DE); KRAUSSE, Reiner, 60488 Frankfurt am Main (DE)
(74) Vertreter: Continental Corporation
(86) Internationale Anmeldenummer: PCT/EP2019/083727
(87) Internationale Veröffentlichungsnummer: WO 2020/120264

(56) Entgegenhaltungen:
- DE-A1- 4 426 179
- US-A1- 2003 222 156
- US-A1- 2005 019 028
- US-A1- 2009 179 084

## Beschreibung

Die vorliegende Erfindung betrifft eine Reinigungsvorrichtung gemäß dem Oberbegriff des Anspruchs 1.

Reinigungsvorrichtungen für eine in einem Fahrzeug angeordnete Wascheinrichtung zum Reinigung von Scheiben, Scheinwerfern, Kameras und Dergleichen mit einem Reinigungsfluid sind bekannt. Für effiziente Reinigung von mehreren voneinander entfernten Reinigungsstellen und/oder großen Flächen werden oft mehrere derartige Reinigungsvorrichtung innerhalb einer Wascheinrichtung in Reihe an eine gemeinsame Fluidleitung angeschlossen und bilden sogenannte Düsenketten. Bei Temperaturen unterhalb des Gefrierpunktes des Reinigungsfluids kann es einfrieren, so dass das Eis die Reinigungsvorrichtung verstopfen oder gar durch seine Ausdehnung zerstören kann. Um dies zu vermeiden ist es bekannt, die Reinigungsvorrichtungen beheizt auszubilden, insbesondere indem ein oder mehrere Heizdrähte durch die Reinigungsvorrichtung geführt werden und das Reinigungsfluid darin erwärmen. Eine zuverlässige und schnelle Enteisung zur Widerherstellung der Durchlässigkeit stellt dabei eine große Herausforderung dar.

Aus WO0056584A1 ist eine Düsenkette mit mehreren seriell durch eine Fluidleitung verbundenen Reinigungsvorrichtungen bekannt. Zur Beheizung der Düsenkette ist durch die Fluidleitung und Reinigungsvorrichtungen eine einzelne Heizleitung verlegt. Diese verläuft durch ein Fluidkanal im Gehäuse der Reinigungsvorrichtung, welche zu Transport von Reinigungsflüssigkeit durch die Düsenkette dient. Der Fluidkanal ist im Gehäuse der Reinigungsvorrichtung durch ein oder mehrere Verbindungskanäle mit einer Kammer verbunden, welche unmittelbar zu einer einfachen Mündungsöffnung oder einem mit Mündungsöffnung versehenen Kugeleinsatz führt. Bei einer derartigen Konstruktion kann jedoch die effektive Enteisung der vom Heizdraht relativ weit entfernten Mündungsöffnung nicht immer zuverlässig erfolgen, weil die vom Heizdraht innerhalb von Gehäuse abgegebene Wärmemenge zu gering ist.

Aus der gattungsgemäßen DE102008003881A1 ist eine in dieser Hinsicht verbesserte Reinigungsvorrichtung mit einer in dem Gehäuse angeordneten vergrößerten, quaderförmigen mit einem verschweißten Deckel verschlossenen Fluidkammer bekannt. Der Fluidkanal mündet jeweils in die gegenüberliegenden Wände der Fluidkammer. Mittig im Boden der Fluidkammer befindet sich ein von einer vorstehenden Schulter umgebener, zu einem Sprüheinsatz führender Fluideinlass. Des Weiteren sind am Boden der Fluidkammer zwei Haltestege angeordnet. Ein durch den Fluidkanal geführter Heizdraht wird in der Fluidkammer mäanderförmig um die Haltestege und die Schulter geführt, wodurch eine bessere Beheizung der Düseneinheit ermöglicht wird.

Der Montageprozess bei derartigen Verlegung des Heizdrahtes in der Fertigung gestaltet sich als sehr aufwändig. Des Weiteren besteht die Gefahr, die Isolation des Heizdrahtes durch Montagewerkzeuge oder Kanten an den vorstehenden Bauteilen zu beschädigen.

Des Weiteren besteht die Gefahr, dass Gehäuse von derartigen Reinigungsvorrichtungen durch einen darin gebildeten Eispropfen gesprengt werden kann.

Aus DE 4426179 A1 ist es ferner bekannt, ein langes, mit Reinigungsflüssigkeit durchfließbares senkrecht angeordnetes Förderrohr mit Heizwendeln umzuwickeln und zur Verbesserung der Wärmeübertragung aus Metall auszuführen. Ein derartiger Aufbau lässt sich jedoch in einem kompakten Gehäuse einer gattungsgemäßen Reinigungsvorrichtung technisch und wirtschaftlich nicht umsetzen.

Es stellt sich somit die Aufgabe der Erfindung eine verbesserte beheizte Reinigungsvorrichtung vorzuschlagen, welche in einer Düsenkette verwendbar ist und bei einer vereinfachten Herstellbarkeit auch bei niedrigen Temperaturen eine hohe Funktionssicherheit sowie schnelle und zuverlässige Enteisung ermöglicht. Die Aufgabe wird endungsgemäß durch eine Reinigungsvorrichtung mit der Merkmalskombination nach Anspruch 1 gelöst.

Weitere Ausführungen und Weiterbildungen ergeben sich aus den Unteransprüchen zusammen mit der Beschreibung.

Die Erfindung sieht vor, dass für eine schnelle und gleichmäßige Verteilung der Wärme in der Kammer ein Wärmeleitelement aus einem besonders wärmeleitfähigen Werkstoff mit einer vergrößerten wärmeabgebenden Oberfläche als ein Einlegeteil angeordnet ist, welches auf dem Heizdraht aufliegt oder mechanisch gegen diesen gepresst ist, dadurch die Wärme aufnimmt und dabei vorzugsweise vollständig vom Reinigungsfluid umströmt ist.

Eine hierdurch wird eine besonders einfache und dennoch effektive Anbindung des Wärmeleitelements an das Heizsystem unter Verzicht auf eine feste Verbindung mittels Verschweißen, Verlöten oder Verkrimpen erreicht.

Dadurch kann das Heizdraht montage- sowie fertigungsgünstig gerade verlegt werden, zugleich wird dennoch eine schnelle großflächige Aufheizung des Reinigungsfluids erreicht. Die Gefahr von Beschädigungen an der Isolation des Heizdrahtes durch Montagewerkzeuge oder Kanten in den Kunststoffbauteilen ist deutlich geringer. Die Länge des Heizdrahtes kann geringer ausgelegt werden, weil Verlegeschlaufen entfallen.

Eine noch effizientere und schnelle Wärmeverteilung an funktionell signifikante Stellen der Reinigungsvorrichtung kann gemäß der vorteilhaften Weiterbildung der Erfindung erreich werden, indem in die Kammer ein Verbindungskanal zur Verbindung der Kammer mit der Sprühdüse mündet und das Wärmeleitelement den Verbindungskanal in Bezug auf die Längsachse des Verbindungskanals zumindest abschnittsweise, insbesondere vollständig in Umfangsrichtung umschließt.

Eine besonders hohe Effizienz in Bezug auf die Herstellbarkeit, Handhabung und die wärmeabgebende Oberfläche kann durch ein scheibenförmig ausgebildetes Wärmeleitelement erreicht werden.

Eine hohe Sicherheit der Reinigungsvorrichtung erreicht, indem in dem Gehäuse eine Membrane aus einem Elastomerwerkstoff vorgesehen wird, welche die Kammer gegenüber Umgebungsatmosphäre hydraulisch abgedichtet. Beim Einfrieren des Reinigungsfluid wird die Ausdehnung des Eises durch die elastische Verformung der Membrane kompensiert und so eine Beschädigung vom Gehäuse verhindert, wodurch es zudem besonders kostensparend dünnwandig gestaltet werden kann.

Für eine besonders einfache Herstellung und Montage kann die Membrane zwischen dem Gehäuse und einem an dem Gehäuse befestigten, Gehäusedeckel hydraulisch dicht eingeklemmt sein.

Durch die dichtende Funktion der Membrane kann zudem das Gehäusedeckel durch eine einfache Rastverbindung statt Schweißung am Gehäuse befestigt werden. Durch Vermeidung der Schweißung können Maschinenkosten sowie Qualitäts- und Prüfungsanforderungen erheblich gesenkt werden.

Die Funktionsfähigkeit und der Membrane wird bei allen Betriebszuständen effektiv erhalten indem im Gehäusedeckel wenigstens eine Belüftungsöffnung zwecks Druckausgleich vorgesehen wird, welche eine pneumatische Verbindung zwischen der Umgebungsatmosphäre und der der Kammer abgewandte Seite der Membrane herstellt.

Die Effizienz der Reinigungsvorrichtung kann durch eine gesteigerte Funktionsintegration erhöht werden, indem die Mündungsstelle des Verbindungskanals in die Kammer eine Dichtkante aufweist, welche in abdichtende Anlage mit der Membrane bringbar ist und dadurch ein druckgesteuertes Sperrventil zum Absperren des Verbindungskanals ausbildet.

Ein besonders kompakter Aufbau der Reinigungsvorrichtung und effektive Wärmeverteilung werden begünstigt, indem der Verbindungskanal zur Sprühdüse im Wesentlichen quer zur Längsachse des Anschlussstutzens mit dem darin verlaufenden Zulaufkanal zur Speisung der Kammer ausgerichtet ist.

Eine flexibel adaptive Einstellung der Sprührichtung wird ermöglicht, wenn das Gehäuse schwenkbar in einem fest am Fahrzeug fixierten Außengehäuse gelagert wird. Besonders effizient kann die Schwenklagerung dabei realisiert werden, wenn die Schwenkachse konzentrisch zur Längsachse des Anschlussstutzens ausgebildet ist. Besonders effektiv wird dies erreicht, wenn der Anschlussstutzen selbst die Schwenkachse bildet und zu diesem Zweck in einen Schwenksitz in dem Außengehäuse eingeklemmt wird, wodurch auf gesonderte Zapfen und dergleichen verzichtet werden kann.

Eine effektive Wärmeverteilung und bei weiter vereinfachten Herstellung und Montierbarkeit wird begünstigt, wenn die Kammer im Wesentlichen ringförmig um die Längsachse des Verbindungskanals ausgebildet wird.

Für effektive Wärmeleitung und -abgabe kann das Wärmeleitelement aus einem Metallwerkstoff, vorzugsweise aus einer korrosionsresistenten Kupferlegierung oder jedoch einem gesondert wärmeleitend behandelten Kunststoff.

Im Übrigen beansprucht die Erfindung eine Wascheinrichtung, welche in ihrem Aufbau erfindungsgemäße Reinigungsvorrichtung enthält.

Nachfolgend wird die Erfindung anhand eines bevorzugten Ausführungsbeispiels näher erläutert. Es zeigen:
Fig.1 eine Wascheinrichtung umfassend eine Düsenkette mit mehreren in Reihe geschalteten erfindungsgemäßen Reinigungsvorrichtungen.

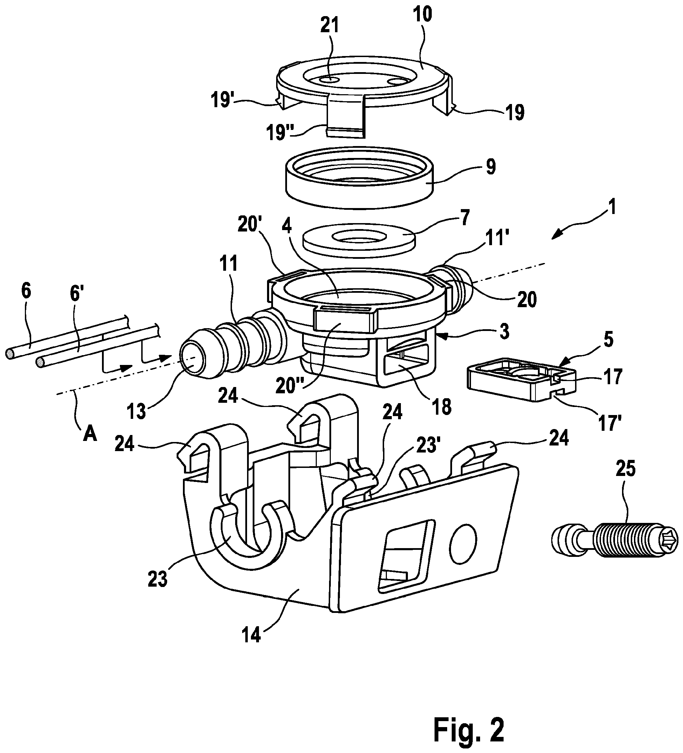

Fig.2 Explosionsdarstellung einer bevorzugten Ausführungsform der Reinigungsvorrichtung.
Fig.3 Schnittdarstellung der Reinigungsvorrichtung quer zur Längsachse des Anschlussstutzens.
Fig.4 Draufsicht auf das bis auf das verlegte Heizdraht nicht bestückte Gehäuse der Reinigungsvorrichtung.

### Fig.1

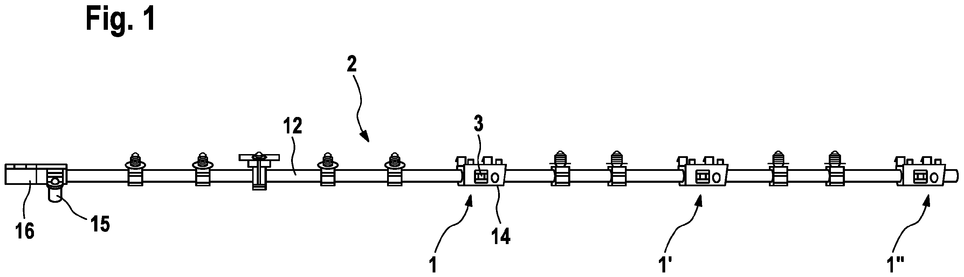

In der Fig.1 ist eine als sogenannte Düsenkette aufgebaute, beheizte Wascheinrichtung 2 zum Reinigen von Fahrzeugscheiben vereinfacht und nicht maßstäblich dargestellt. Auf eine gemeinsame same Fluidleitung 12 sind in Reihe mehrere Reinigungsvorrichtungen 1, 1', 1" angeschlossen. In der gezeigten Ausführungsform verfügt jede der Reinigungsvorrichtungen 1, 1', 1" über ein Außengehäuse 14, das unbeweglich mit einem Fahrzeugteil, beispielsweise einem Anbauteil einer Motorhaube verbunden ist und ein in dem Außengehäuse 14 schwenkbar gelagertes Gehäuse 3, aus dem durch ein im Außengehäuse 14 vorgesehenes Fenster ein Reinigungsfluidstrahl heraustritt.

Über eine hydraulische Schnittstelle 15 wird die Wascheinrichtung aus einer hier nicht gezeigten Fördereinrichtung unter Druck mit Reinigungsfluid versorgt.

Durch die Fluidleitung 12 und die Reinigungsvorrichtungen 1, 1', 1" hindurch ist eine Heizleitung verlegt, welche über eine elektrische Schnittstelle 16 mit elektrischen Strom versorgt wird. Bei Aktivierung der elektrischen Stromversorgung heizt sich die Heizleitung über ihre Gesamtlänge auf und erwärmt dadurch den sie umgebenden Reinigungsfluid. Meistens wird die

Heizleitung als eine lange Schlaufe verlegt, dessen beiden Enden an die elektrische Schnittstelle angeschlossen sind, so dass durch jede Reinigungsvorrichtung 1, 1', 1" je zwei einzelne Heizdrähte verlaufen.

Erfindungsgemäß sind Abweichungen im Gesamtaufbau und Beschaffenheit einzelner Komponenten der Wascheinrichtung 2 jederzeit zulässig, solange wenigstens eine Reinigungsvorrichtung 1 gemäß der nachfolgenden Beschreibung vorhanden ist.

### Fig.2

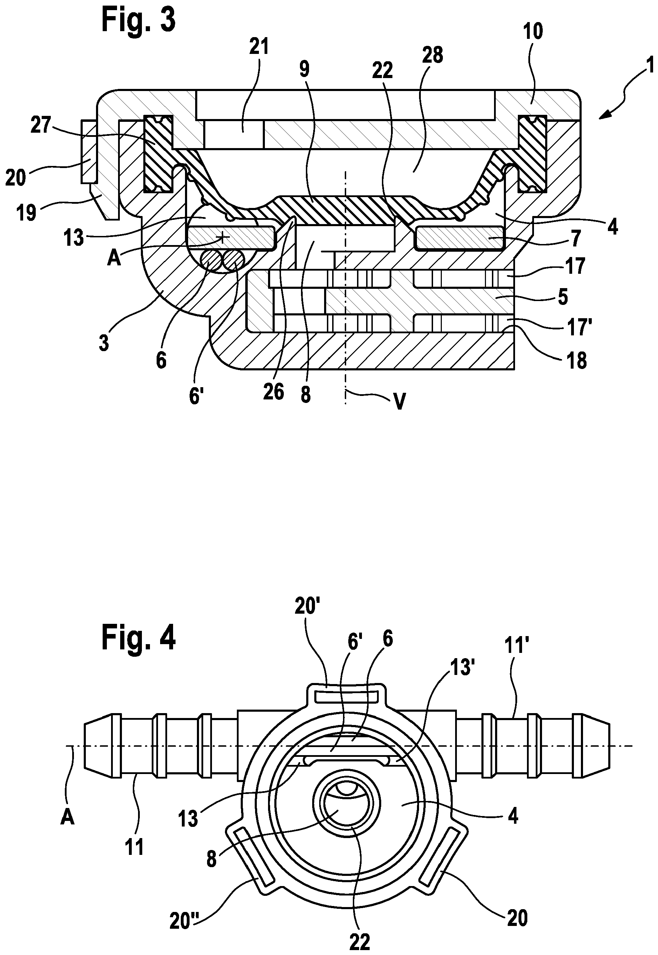

In der Fig.1 ist eine bevorzugte Ausführungsform der Reinigungsvorrichtung 1 in Explosionsdarstellung gezeigt. An einem Gehäuse 3 sind zwei Anschlussstutzen 11, 11' zum Anschluss der Fluidleitung 12 zueinander fluchtend angeordnet. In dem Gehäuse 3 ist eine Kammer 4 ausgebildet. Die Kammer wird aus einem durch die Anschlussstutzen 11 verlaufenden Zulaufkanal 13 mit Reinigungsfluid befüllt. Heizdrähte 6,6` verlaufen durch den Zulaufkanal 13 und die Kammer 4. Über einen Verbindungskanal 8 siehe Fig.3 wird das Reinigungsfluid aus der Kammer 4 zu einer Sprühdüse 5 geleitet, wo es aus Austrittsöffnungen 17, 17' auf die zu reinigende Oberfläche ausgestoßen wird. In der gezeigten Ausführungsform ist die Sprühdüse 5 als ein würfelförmiges Einsatzelement, auch Chip genannt ausgebildet, welches in einem Aufnahmesitz 18 mit einem rechteckigen Querschnitt im Gehäuse 3 aufgenommen ist.

Das Gehäuse 3 wird meist aus einem schlecht wärmeleitenden Thermoplastwerkstoff wie Polyamid und Dergleichen hergestellt. Um die Wärmeabgabe an das Reinigungsfluid zu vergrößern wird ein gesondertes gut wärmeleitendes Wärmeleitelement 7 verwendet. Das scheibenförmige Wärmeleitelement 7 wird derart in die Kammer 4 eingelegt, dass es bereichsweise einen mechanischen Kontakt zu den Heizdrähten 6,6` hat und dadurch aus diesen Wärme aufnimmt. Als Werkstoff für das Wärmeleitelement 7 eignen sich grundsätzlich alle in der Betriebsumgebung dauerhaltbaren Werkstoffe mit einer höhen Wärmeleitfähigkeit, insbesondere einem Metall. Es können jedoch auch Kunststoffe mit einer verbesserten Wärmeleitfähigkeit eingesetzt werden, was beispielsweise durch Verwendung von keramischen, metallischen oder sonstigen geeigneten Füllstoffen erreicht werden kann.

Eine in das Gehäuse 3 eingelegte elastische Membrane 9 begrenzt und die Kammer 4 gegenüber der Umgebung ab. Diese wird von einem Gehäusedeckel 10 abdichtend verpresst. Das Gehäusedeckel 10 wird mittels korrespondierenden Restelementen 19,20 am Gehäuse 3 verrastet befestigt. Zu diesem Zweck verfügt das Gehäusedeckel 10 über mehre zungenförmige, mit Rasthacken versehenen Rastelemente 19,19`, 19" welche unter Bildung eines Hinterschnitts in korrespondierende ösenförmige Rastelemente 20,20`,20" am Außenrand vom Gehäuse 3 eingreifen.

Zur Einstellung der Sprührichtung ist das Gehäuse 3 schwenkbar in einem Außengehäuse 14 gelagert, welches mittels Befestigungselementen 24 unbeweglich am einem Fahrzeugteil fixiert wird. Als Schwenkachse dienen die Anschlussstutzen 11,11', welche zu diesem Zweck in die korrespondierenden Schwenksitze 23,23` im Außengehäuse 14 eingeklipst werden.

Eine zwischen dem Gehäuse 3 und dem Außengehäuse 14 wirkende Einstellschraube 25 dient zur exakten Einstellung und dauerhaften Aufrechterhaltung der eingestellten Schwenkposition.

### Fig.3

In der Fig.3 ist die vorstehend beschriebene Reinigungsvorrichtung 1 im Zusammenbau im Querschnitt dargestellt. Das Außengehäuse 14 ist nicht gezeigt.

Die Kammer 4 ist weitgehend ringförmig um die Längsachse V des mittig angeordneten Verbindungskanals 8 im Gehäuse 3 arrangiert. Die aus einem Elastomerwerkstoff hergestellte Membrane 9 wird an ihrem radial außen umlaufend ausgebildeten Dichtwulst 27 zwischen dem Gehäuse 3 dem Gehäusedeckel 10 hydraulisch dicht eingeklemmt ist. Zwischen dem Gehäusedeckel 10 und der Membrane 9 ist ein Hohlraum 28 ausgebildet.

Eine Belüftungsöffnung 21 im Gehäusedeckel 10 stellt zwecks Druckausgleich eine pneumatische Verbindung zum dem Hohlraum 28 und somit zwischen der der Kammer 4 abgewandten Seite der Membrane 9 und der Umgebungsatmosphäre her. Dadurch wird gewährleistet, dass die Membrane 9 sich ungehindert in den Hohlraum 28 ausdehnen und wölben kann, was beispielsweise beim Druckbefüllung der Kammer 4 mit Reinigungsfluid oder bei Bildung eines Eispropfen durch Einfrieren des Reinigungsfluids der Fall ist.

Der Zulaufkanal 13 mit zwei darin verlegten Heizdrähten 6,6` verläuft durch einen radialen Außenbereich der Kammer 4. Der Verbindungskanal 8 ist quer zu der Längsachse A des Anschlussstutzens 11 beziehungsweise des Zulaufkanals 13 ausgerichtet und mündet radial mittig in die Kammer 4 ein.

Die Mündungsstelle des Verbindungskanals 8 ist von einem umlaufenden Kragen 26 umsäumt, welches endseitig eine Dichtkante 22 aufweist. In dem hier gezeigten unbetätigten Ausgangszustand liegt die Membrane 9 elastisch vorgespannt auf der Dichtkante 22 auf, wodurch der Verbindungskanal 8 versperrt und hydraulische Verbindung zwischen der Kammer 4 und der Sprühdüse 5 unterbunden ist. Bei Aktivierung der Fördereinrichtung und Druckbefüllung der Kammer 4 mit Reinigungsfluid wölbt sich die Membrane 9 und hebt sich von der Dichtkante 22 ab. Dadurch wird der Verbindungskanal 8 entsperrt, das Reinigungsfluid gelangt zur Sprühdüse 5 und wird aus den Austrittsöffnungen 17, 17' ausgestoßen. Die Membrane 9 fungiert so als Ventilkörper und die Dichtkante 22 als Ventilsitz eines druckgesteuerten Sperrventils.

Das scheibenförmige Wärmeleitelement 7 befindet sich in der Kammer 4, wo es vom Reinigungsfluid umströmt wird. Radial mittig umschließt es vollständig die Mündungsstelle des Verbindungskanals 8. Mit einem Randabschnitt ragt es in den Zulaufkanal 13 hinein, wo es auf den Heizdrähten 6 aufliegt. Die Wärme wird so durch eine einfache mechanische Kopplung von den Heizdrähten in das Wärmeleitelement 7 geleitet. Aufgrund seiner guten wärmeleitenden Eigenschaften heizt sich das Wärmeleitelement 7 schnell sowie im Ganzen auf und gibt die Wärme über seine Oberfläche an das umgebende Reinigungsfluid ab um sie konvektiv weiter zu transportieren. Dadurch wird die Wärme aus den Heizdrähten 6,6' schnell, großflächig und gleichmäßig in der gesamten Kammer 4 verteilt. Gleichzeitig werden auch der Verbindungskanal 8 und das Sperrventil geheizt.

Für eine bessere Wärmeleitung kann Wärmeleitelement 7 auch gegen die Heizdrähte 6,6` mechanisch gedrückt beziehungsweise gepresst sein, beispielsweise indem es radial Außen oder innen am Gehäuse 3 geklemmt wird.

### Fig.4

Die Fig.4 zeigt zur Verdeutlichung der bevorzugten Gehäusekonstruktion der Reinigungsvorrichtung 1 das Gehäuse 3 in Draufsicht.

Die die Kammer 4 ist in ihrer bevorzugten Ausgestaltung strömungsgünstig ringförmig um die radial mittig angeordnete Mündungsstelle des Verbindungskanals 8 gestaltet. Die beiden Anschlussstutzen 11,11' sind in einem radialen Außenbereich vom Gehäuse 3 positioniert, so dass der Zulaufkanal 13 mit den darin montagegünstig geradlinig direkt verlegten Heizdrähten 6,6` lediglich durch einen radialen Außenbereich der Kammer 3 verlaufen.

### Bezugszeichenliste

- 1: Reinigungsvorrichtung
- 2: Wascheinrichtung
- 3: Gehäuse
- 4: Kammer
- 5: Sprühdüse
- 6: Heizdraht
- 7: Wärmeleitelement
- 8: Verbindungskanal
- 9: Membrane
- 10: Gehäusedeckel
- 11: Anschlussstutzen
- 12: Fluidleitung
- 13: Zulaufkanal
- 14: Außengehäuse
- 15: Hydraulische Schnittstelle
- 16: Elektrische Schnittstelle
- 17: Austrittsöffnung
- 18: Aufnahmesitz
- 19: Rastelement
- 20: Rastelement
- 21: Belüftungsöffnung
- 22: Dichtkante
- 23: Schwenksitz
- 24: Befestigungselement
- 25: Einstellschraube
- 26: Kragen
- 27: Dichtwulst#
- 28: Hohlraum
- A: Längsachse des Anschlussstutzens
- V: Längsachse des Verbindungskanals

## Patentansprüche

1. Reinigungsvorrichtung (1) für eine in einem Fahrzeug angeordnete Wascheinrichtung (2) umfassend ein Gehäuse (3) mit einer in dem Gehäuse (3) ausgebildeten, mit Reinigungsfluid befüllbaren Kammer (4), welche hydraulisch mit wenigstens einer Sprühdüse (5) für das Reinigungsfluid verbindbar ist und mit wenigstens einem zumindest abschnittsweise in die Kammer (4) hineinragenden aufheizbaren Heizdraht (6) **dadurch gekennzeichnet, dass** in der Kammer (4) ein Wärmeleitelement (7) zur Vergrößerung einer wärmeübertragenden Fläche angeordnet ist, welches die Wärme aus dem Heizdraht (6) aufnimmt und zumindest bereichsweise, insbesondere vollständig vom Reinigungsfluid umströmt ist, wobei das Wärmeleitelement (7) als ein Einlegeteil aus einem Werkstoff mit einer gegenüber dem Werkstoff des Gehäuses (3) erhöhten Wärmeleitfähigkeit ausgebildet ist und zwecks Wärmeaufnahme abschnittsweise auf dem Heizdraht (6) aufliegt oder gegen diesen mechanisch gepresst ist.

2. Reinigungsvorrichtung (1) nach Anspruch 1 **dadurch gekennzeichnet, dass** in die Kammer (4) ein Verbindungskanal (8) zur Verbindung der Kammer (4) mit der Sprühdüse (5) mündet und das Wärmeleitelement (7) den Verbindungskanal (8) in Bezug auf die Längsachse (V) des Verbindungskanals (8) zumindest abschnittsweise, insbesondere vollständig in Umfangsrichtung umschließt.

3. Reinigungsvorrichtung (1) nach wenigstens einem der vorstehenden Ansprüche **dadurch gekennzeichnet, dass** das Wärmeleitelement (7) scheibenförmig ausgebildet ist.

4. Reinigungsvorrichtung (1) nach wenigstens einem der vorstehenden Ansprüche **dadurch gekennzeichnet, dass** in dem Gehäuse (3) eine Membrane (9) aus einem Elastomerwerkstoff angeordnet ist, welche die Kammer (4) begrenzt und gegenüber Umgebungsatmosphäre hydraulisch abgedichtet.

5. Reinigungsvorrichtung (1) nach Anspruch 4 **dadurch gekennzeichnet, dass** die Membrane (9) zwischen dem Gehäuse (3) und einem an dem Gehäuse (3) befestigten Gehäusedeckel (10) hydraulisch dicht eingeklemmt ist.

6. Reinigungsvorrichtung (1) nach Anspruch 5 **dadurch gekennzeichnet, dass** das Gehäusedeckel (10) über eine Rastverbindung am Gehäuse (3) befestigt ist.

7. Reinigungsvorrichtung (1) nach Anspruch 5 oder 6 **dadurch gekennzeichnet, dass** das Gehäusedeckel (10) wenigstens eine Belüftungsöffnung (21) zum Druckausgleich zwischen einer der Kammer (4) abgewandte Seite der Membrane (9) und der Umgebungsatmosphäre aufweist.

8. Reinigungsvorrichtung (1) nach wenigstes einem der Ansprüche 2 bis 7 **dadurch gekennzeichnet, dass** die Mündungsstelle des Verbindungskanals (8) in die Kammer (4) eine Dichtkante (22) aufweist, welche in abdichtende Anlage mit der Membrane (9) bringbar ist und dadurch ein druckgesteuertes Sperrventil zum Absperren des Verbindungskanals (8) ausbildet.

9. Reinigungsvorrichtung (1) nach wenigstens einem der Ansprüche 2 bis 8 **dadurch gekennzeichnet, dass** das Gehäuse (3) wenigstens einen Anschlussstutzen (11) zum Anschluss einer Fluidleitung (12) aufweist und die Kammer (4) aus einem durch den Anschlussstutzen (11) verlaufenden Zulaufkanal (13) mit Reinigungsfluid befüllt wird und der Verbindungskanal (8) im Wesentlichen quer zu einer Längsachse (A) des Anschlussstutzens (11) ausgerichtet ist.

10. Reinigungsvorrichtung (1) nach Anspruch 9 **dadurch gekennzeichnet, dass** das Gehäuse (3) zur Einstellung einer Sprührichtung in einem Außengehäuse (14) schwenkbar gelagert ist, wobei die Schwenkachse konzentrisch zur Längsachse (A) des Anschlussstutzens (11) ausgebildet ist, insbesondere der Anschlussstutzen (11) die Schwenkachse bildet.

11. Reinigungsvorrichtung (1) nach wenigstens einem der Ansprüche 2 bis 10 **dadurch gekennzeichnet, dass** die Kammer (4) im Wesentlichen ringförmig um die Längsachse (V) des Verbindungskanals (8) ausgebildet ist.

12. Reinigungsvorrichtung (1) nach wenigstens einem der vorstehenden Ansprüche **dadurch gekennzeichnet, dass** das Heizdraht (6) durch einen Randbereich der Kammer (4) im Wesentlichen geradlinig verlegt ist.

13. Reinigungsvorrichtung (1) nach wenigstens einem der vorstehenden Ansprüche **dadurch gekennzeichnet, dass** das Wärmeleitelement (7) aus einem Metallwerkstoff ausgebildet ist.

14. Wascheinrichtung (2) umfassend wenigstens eine Reinigungsvorrichtung (1) nach wenigstens einem der vorstehenden Ansprüche.

## Claims

1. Cleaning device (1) for a washing apparatus (2) arranged in a vehicle, comprising a housing (3) with a chamber (4) which is formed in the housing (3), can be filled with cleaning fluid and is hydraulically connectable to at least one spray nozzle (5) for the cleaning fluid, and with at least one heatable heating wire (6) protruding at least in sections into the chamber (4), **characterized in that** a heat-conducting element (7) is arranged in the chamber (4) to enlarge a heat-transferring surface, said heat-conducting element (7) absorbing the heat from the heating wire (6), and being at least partially, in particular completely, surrounded by the cleaning fluid, wherein the heat-conducting element (7) is configured as an insert formed from a material having higher thermal conductivity than the material of the housing (3) and, for the purpose of absorbing heat, rests in sections on the heating wire (6) or is pressed mechanically against the latter.

2. Cleaning device (1) according to Claim 1, **characterized in that** a connecting channel (8) for connecting the chamber (4) to the spray nozzle (5) opens into the chamber (4) and the heat-conducting element (7) surrounds the connecting channel (8) with respect to the longitudinal axis (V) of the connecting channel (8) at least in sections, in particular completely, in the circumferential direction.

3. Cleaning device (1) according to at least one of the preceding claims, **characterized in that** the heat-conducting element (7) is disc-shaped.

4. Cleaning device (1) according to at least one of the preceding claims, **characterized in that** a membrane (9) made of an elastomer material is arranged in the housing (3), the membrane delimiting the chamber (4) and hydraulically sealing same from the ambient atmosphere.

5. Cleaning device (1) according to Claim 4, **characterized in that** the membrane (9) is clamped in a hydraulically tight manner between the housing (3) and a housing cover (10) fastened to the housing (3).

6. Cleaning device (1) according to Claim 5, **characterized in that** the housing cover (10) is fastened to the housing (3) via a latching connection.

7. Cleaning device (1) according to Claim 5 or 6, **characterized in that** the housing cover (10) has at least one ventilation opening (21) for pressure equalization between a side of the membrane (9) facing away from the chamber (4) and the ambient atmosphere.

8. Cleaning device (1) according to at least one of Claims 2 to 7, **characterized in that** the opening point of the connecting channel (8) into the chamber (4) has a sealing edge (22) which can be brought into sealing contact with the membrane (9) and thereby forms a pressure-controlled shut-off valve for shutting off the connecting channel (8).

9. Cleaning device (1) according to at least one of Claims 2 to 8, **characterized in that** the housing (3) has at least one connection piece (11) for connecting a fluid line (12), and the chamber (4) is filled with cleaning fluid from an inlet channel (13) running through the connection piece (11), and the connecting channel (8) is oriented substantially transversely with respect to a longitudinal axis (A) of the connection piece (11).

10. Cleaning device (1) according to Claim 9, **characterized in that** the housing (3) is pivotably mounted in an outer housing (14) for setting a spray direction, wherein the pivot axis is formed concentrically with respect to the longitudinal axis (A) of the connection piece (11), in particular the connection piece (11) forms the pivot axis.

11. Cleaning device (1) according to at least one of Claims 2 to 10, **characterized in that** the chamber (4) is substantially annular around the longitudinal axis (V) of the connecting channel (8).

12. Cleaning device (1) according to at least one of the preceding claims, **characterized in that** the heating wire (6) is laid substantially rectilinearly through an edge region of the chamber (4).

13. Cleaning device (1) according to at least one of the preceding claims, **characterized in that** the heat-conducting element (7) is formed from a metal material.

14. Washing apparatus (2) comprising at least one cleaning device (1) according to at least one of the preceding claims.

## Revendications

1. Dispositif de nettoyage (1) pour un appareil de lavage (2) agencé dans un véhicule, comprenant un boîtier (3) avec une chambre (4) réalisée dans le boîtier (3), pouvant être remplie de fluide de nettoyage, qui peut être reliée hydrauliquement à au moins une buse de pulvérisation (5) pour le fluide de nettoyage et avec au moins un fil chauffant (6) pouvant être chauffé, pénétrant au moins par sections dans la chambre (4), **caractérisé en ce qu'**un élément conducteur de chaleur (7) est agencé dans la chambre (4) pour agrandir une surface transmettant la chaleur, lequel élément absorbe la chaleur du fil chauffant (6) et est entouré au moins par zones, notamment entièrement, par le fluide de nettoyage, l'élément conducteur de chaleur (7) étant réalisé sous la forme d'une pièce d'insertion en un matériau ayant une conductivité thermique supérieure à celle du matériau du boîtier (3) et reposant par sections sur le fil chauffant (6) ou étant pressé mécaniquement contre celui-ci pour l'absorption de chaleur.

2. Dispositif de nettoyage (1) selon la revendication 1, **caractérisé en ce qu'**un canal de liaison (8) pour relier la chambre (4) à la buse de pulvérisation (5) débouche dans la chambre (4) et l'élément conducteur de chaleur (7) enveloppe le canal de liaison (8) par rapport à l'axe longitudinal (V) du canal de liaison (8) au moins par sections, notamment entièrement dans la direction circonférentielle.

3. Dispositif de nettoyage (1) selon au moins l'une quelconque des revendications précédentes, **caractérisé en ce que** l'élément conducteur de chaleur (7) est réalisé en forme de disque.

4. Dispositif de nettoyage (1) selon au moins l'une quelconque des revendications précédentes, **caractérisé en ce qu'**une membrane (9) en un matériau élastomère est agencée dans le boîtier (3), laquelle délimite la chambre (4) et l'étanchéifie hydrauliquement vis-à-vis de l'atmosphère ambiante.

5. Dispositif de nettoyage (1) selon la revendication 4, **caractérisé en ce que** la membrane (9) est serrée de manière hydrauliquement étanche entre le boîtier (3) et un couvercle de boîtier (10) fixé au boîtier (3).

6. Dispositif de nettoyage (1) selon la revendication 5, **caractérisé en ce que** le couvercle de boîtier (10) est fixé au boîtier (3) par l'intermédiaire d'une liaison par encliquetage.

7. Dispositif de nettoyage (1) selon la revendication 5 ou 6, **caractérisé en ce que** le couvercle de boîtier (10) présente au moins une ouverture d'aération (21) pour équilibrer la pression entre un côté de la membrane (9) détourné de la chambre (4) et l'atmosphère ambiante.

8. Dispositif de nettoyage (1) selon au moins l'une quelconque des revendications 2 à 7, **caractérisé en ce que** le point d'embouchure du canal de liaison (8) dans la chambre (4) présente une arête d'étanchéité (22) qui peut être amenée en application étanche avec la membrane (9) et réalise ainsi une soupape d'arrêt commandée par pression pour fermer le canal de liaison (8).

9. Dispositif de nettoyage (1) selon au moins l'une quelconque des revendications 2 à 8, **caractérisé en ce que** le boîtier (3) présente au moins une tubulure de raccordement (11) pour le raccordement d'une conduite de fluide (12) et la chambre (4) est remplie de fluide de nettoyage à partir d'un canal d'alimentation (13) s'étendant à travers la tubulure de raccordement (11) et le canal de liaison (8) est orienté essentiellement transversalement à un axe longitudinal (A) de la tubulure de raccordement (11).

10. Dispositif de nettoyage (1) selon la revendication 9, **caractérisé en ce que** le boîtier (3) est monté de manière pivotante dans un boîtier extérieur (14) pour l'ajustement d'une direction de pulvérisation, l'axe de pivotement étant réalisé de manière concentrique à l'axe longitudinal (A) de la tubulure de raccordement (11), la tubulure de raccordement (11) formant notamment l'axe de pivotement.

11. Dispositif de nettoyage (1) selon au moins l'une quelconque des revendications 2 à 10, **caractérisé en ce que** la chambre (4) est réalisée sous forme essentiellement annulaire autour de l'axe longitudinal (V) du canal de liaison (8).

12. Dispositif de nettoyage (1) selon au moins l'une quelconque des revendications précédentes, **caractérisé en ce que** le fil chauffant (6) est posé de manière essentiellement rectiligne à travers une zone de bord de la chambre (4).

13. Dispositif de nettoyage (1) selon au moins l'une quelconque des revendications précédentes, **caractérisé en ce que** l'élément conducteur de chaleur (7) est réalisé en un matériau métallique.

14. Appareil de lavage (2) comprenant au moins un dispositif de nettoyage (1) selon au moins l'une quelconque des revendications précédentes.
